# EUROPÄISCHE PATENTSCHRIFT

(11) **EP 4 179 943 B1**
(45) Veröffentlichungstag und Bekanntmachung des Hinweises auf die Patenterteilung: **24.07.2024**
(21) Anmeldenummer: 22206011.3
(22) Anmeldetag: 08.11.2022
(51) Int. Cl.: A47L 11/00, A47L 11/40, A47L 13/00

(54) **HANDGEFÜHRTE BODENREINIGUNGSMASCHINE**
HAND-HELD FLOOR CLEANING MACHINE
MACHINE DE NETTOYAGE DE SOL GUIDÉE À LA MAIN

(30) Priorität: 16.11.2021 DE 102021129923
(43) Veröffentlichungstag der Anmeldung: 17.05.2023
(73) Patentinhaber: Hako GmbH, 23843 Bad Oldesloe (DE)
(72) Erfinder: Protz, Carsten, 23730 Altenkrempe (DE); Ulrich, Bertram, 23556 Lübeck (DE); Mackerodt, Max, 23562 Lübeck (DE)
(74) Vertreter: Bird & Bird LLP - Hamburg

(56) Entgegenhaltungen:
- EP-A2- 2 250 957
- CH-A- 149 047
- CN-Y- 2 328 331

## Beschreibung

Die vorliegende Erfindung betrifft eine handgeführte Bodenreinigungsmaschine insbesondere eine Scheuersaugmaschine, mit einer Basis und einem Bedienholm, wobei die Basis einer Reinigungselements Anordnung mit wenigstens einem angetriebenen Reinigungselement aufweist und wobei sich der Bedienholm entlang einer Längsachse zwischen einem proximalen Ende und einem Betätigungsende erstreckt und über ein Gelenk schwenkbar an der Basis angebracht ist, sodass der Bedienholm in beliebige Richtungen gegenüber der Basis verschwenkt werden kann.

Derartige Bodenreinigungsmaschinen sind aus dem Stand der Technik bekannt. So beschreibt beispielsweise die EP 2 962 614 B1 eine Bodenreinigungsmaschine, die eine Basis aufweist, an der eine Reinigungselementanordnung mit zwei drehend angetriebenen Reinigungselementen vorgesehen ist. An der Basis ist ein Bedienholm schwenkbar angebracht, wobei dieser um zwei voneinander getrennte Schwenkachsen, die senkrecht zueinander verlaufen, gegenüber der Basis verschwenkt werden kann. Dabei ist die Gelenkanordnung derart ausgestaltet, dass durch ein Schwenken des Bedienholms um seine Längsachse die Basis um eine sich senkrecht zu der zu reinigenden Bodenfläche erstreckende Hochachse gedreht werden kann. Es ist also mittels des Bedienholms möglich, ein Drehmoment um die Hochachse auf die Basis auszuüben, um diese zu steuern, also deren Ausrichtung auf der zu reinigenden Bodenfläche zu ändern.

Weitere Bodenreinigungsmaschinen sind aus der EP 2 250 957 A2, von der die vorliegende Erfindung ausgeht, der CH 149047 A und der CN 2 328 331 Y bekannt, wobei diese Dokumente jeweils einen Bedienholm beschreiben, der über ein Kugelgelenk schwenkbar an der Basis angeordnet ist.

Die aus dem Stand der Technik bekannten Bodenreinigungsmaschinen haben sich jedoch deswegen als nachteilhaft erwiesen, weil der Aufbau der Gelenkanordnung kompliziert ist und vergleichsweise viel Raum einnimmt.

Daher ist es ausgehend vom Stand der Technik die Aufgabe der vorliegenden Erfindung, eine eingangs beschriebene Bodenreinigungsmaschine mit einem Bedienholm und einer Basis bereitzustellen, bei der das zwischen Bedienholm und Basis angeordnete Gelenk einfach und kompakt aufgebaut ist.

Erfindungsgemäß wird diese Aufgabe gelöst durch eine Bodenreinigungsmaschine mit einer Basis und einem Bedienholm, wobei die Basis eine Reinigungselementanordnung mit wenigstens einem angetriebenen Reinigungselement aufweist, an dem wenigstens ein Eingriffselement vorgesehen sind, wobei das Reinigungselement ausgebildet ist, mit dem daran vorgesehenen wenigstens einen Eingriffselement mit einer zu reinigenden Bodenfläche einzugreifen. Der Bedienholm erstreckt sich entlang einer Längsachse zwischen einem proximalen Ende und einem Bestätigungsende und über ein Gelenk derart schwenkbar an der Basis angebracht ist, dass der Bedienholm in beliebige Richtungen gegenüber der Basis verschwenkt werden kann. Das Gelenk weist ein erstes Gelenkelement, dessen Einhüllende kugelschalenförmig ist, und ein zweites Gelenkelement auf, wobei das erste Gelenkelement in dem zweiten Gelenkelement aufgenommen und darin derart abgestützt ist, dass das erste Gelenkelement gegenüber dem zweiten Gelenkelement um einen in Bezug auf das zweite Gelenkelement ortsfesten Schwenkpunkt, der mit dem Mittelpunkt der Einhüllenden zusammenfällt, verschwenkbar ist und dass der Mittelpunkt der Einhüllenden relativ zu dem zweiten Gelenkelement unverlagerbar ist.

Weiterhin sind erfindungsgemäß an einem aus dem ersten und dem zweiten Gelenkelement wenigstens zwei kreisabschnittsförmig verlaufende Nuten vorgesehen, die zu der Einhüllenden hin geöffnet sind und sich entlang der Einhüllenden erstrecken, und an dem anderen aus dem ersten und dem zweiten Gelenkelement sind wenigstens ein erstes Eingriffsteil und ein zweites Eingriffsteil vorgesehen, wobei sich das erste Eingriffsteil in die erste der Nuten erstreckt und sich das zweite Eingriffsteile in die zweite der Nuten erstreckt. Schließlich ist das erste Gelenkelement an dem einen aus der Basis und dem proximalen Ende des Bedienholms angebracht und das zweite Gelenkelement ist an dem anderen aus der Basis und dem proximalen Ende des Bedienholms angebracht.

Demnach weist die erfindungsgemäße Bodenreinigungsmaschine eine Basis und einen Bedienholm auf. An der Basis ist eine Reinigungselementanordnung mit wenigstens einem angetriebenen Reinigungselement vorgesehen, wobei das wenigstens eine Reinigungselement wenigstens ein Eingriffselement aufweist, dessen freies Ende mit der zu reinigenden Bodenfläche eingreifen kann. Beispielsweise kann es sich bei dem Reinigungselement um eine Bürste handeln, wobei die Eingriffselemente dann Borsten sind, deren freie Enden mit der zu reinigenden Bodenfläche eingreifen. Es ist aber genauso denkbar, dass es sich bei dem Reinigungselement um ein sogenanntes Pad handelt, bei dem das Eingriffselement durch ein an dem Pad vorgesehenes flächiges Material gebildet wird, dessen Oberfläche zur Anlage mit der zu reinigenden Bodenfläche kommt. Die vorliegende Erfindung ist aber nicht auf diese beiden Beispiele beschränkt, sondern es können auch beliebige andere Formen von Reinigungselementen verwendet werden. Dabei können die Reinigungselemente drehend aber auch linear angetrieben sein oder sie können eine Orbitalbewegung ausführen. Auch hier ist die vorliegende Erfindung nicht auf diese Antriebsmöglichkeiten beschränkt, sondern die Reinigungselemente können auch auf jede andere beliebige Weise angetrieben sein.

Der sich entlang einer Längsachse von der Basis weg erstreckende Bedienholm weist ein proximales und ein Betätigungsende auf, wobei das proximale Ende benachbart zu der Basis angeordnet ist, während sich das Betätigungsende am von der Basis entfernten Ende des Bedienholm vorgesehen ist und vorzugsweise Mittel wie Griffe oder dergleichen aufweist, sodass es von einem Benutzer geführt werden kann.

Erfindungsgemäß ist weiter zwischen dem proximalen Ende des Bedienholms und der Basis ein Gelenk vorgesehen, dass zunächst derart ausgebildet ist, dass der Bedienholm in beliebige Richtungen gegenüber der Basis verschwenkt werden kann. Weiterhin ist erfindungsgemäß vorgesehen, dass das Gelenk ein erstes Gelenkelement aufweist, dessen Einhüllende kugelschalenförmig ist. Dadurch, dass die Einhüllende des ersten Gelenkselements kugelschalenförmig ist, ist umfasst, dass das erste Gelenkelement selbst kugelförmig sein kann. Es ist aber auch möglich, dass das erste Gelenkelement eine Vielzahl von flächigen Elementen aufweist, deren Außenkanten kreisabschnittsförmig ausgebildet sind. Es ist also nicht zwingend erforderlich, dass das erste Gelenkelement kugelförmig ausgebildet ist, sondern es ist ausreichend, wenn das erste Gelenkelement so ausgestaltet ist, dass eine Einhüllende die Form einer Kugel aufweist.

Ferner ist erfindungsgemäß ein zweites Gelenkelement vorgesehen, dass das erste Gelenkelement aufnimmt und in der Weise abstützt, dass das erste Gelenkelement gegenüber dem zweiten Gelenkelement um einen Schwenkpunkt, der ortsfest relativ zu den zweiten Gelenkelement ist, verschwenkt werden kann. Darüber hinaus fällt der Schwenkpunkt mit dem Mittelpunkt der kugelschalenförmigen Einhüllenden des ersten Gelenkelements zusammen. Demnach soll das erste Gelenkelement in dem zweiten Gelenkelement derart geführt sein, d. h. Teile des zweiten Gelenkelement liegen an dem ersten Gelenkelement in geeigneter Weise an, dass das erste Gelenkelement gegenüber dem zweiten Gelenkelement verschwenkt werden kann, wobei der Schwenkpunkt, durch den die jeweilige Schwenkachse verläuft, mit dem Mittelpunkt der Einhüllenden zusammenfällt. Dabei ist das erste Gelenkelement so in den zweiten Gelenkelement gehaltert, dass der Mittelpunkt der Einhüllenden nicht gegenüber den zweiten Gelenkelement verschoben werden kann. Es ist also nur die Schwenkbewegung möglich, während eine Verschiebebewegung des ersten Gelenkelements relativ zu den zweiten Gelenkelement verhindert wird.

Weiterhin ist vorgesehen, dass an einem aus dem ersten und dem zweiten Gelenkelement wenigstens zwei kreisabschnittsförmig verlaufende Nuten vorgesehen sind, die zu der Einhüllenden hin geöffnet sind und sich entlang der Einhüllenden erstrecken. Wenn die Nuten an dem ersten Gelenkelement mit der kugelschalenförmig verlaufenden Einhüllenden vorgesehen sind, erstrecken sich die Nuten von der Einhüllenden nach innen und verlaufen entlang einer kreisabschnittsförmigen Linie entlang der Einhüllenden. Wenn alternativ die Nuten an dem zweiten Gelenkelement vorgesehen sind, sind sie an einer Innenfläche des zweiten Gelenkelement ausgebildet und hin zu dem ersten Gelenkelement geöffnet. Dabei erstrecken sie sich ebenfalls entlang einer kreisabschnittsförmigen Linie und um die Einhüllende des ersten Gelenkelement herum. Darüber hinaus sind an dem anderen aus dem ersten und dem zweiten Gelenkelement wenigstens ein erstes Eingriffsteil und ein zweites Eingriffsteil vorgesehen, wobei sich das erste Eingriffsteil in die erste der Nuten erstreckt und sich das zweite Eingriffsteil in die zweite der Nuten erstreckt. Es ist also erfindungsgemäß vorgesehen, dass entweder an der Innenfläche des zweiten Gelenkelement oder der Außenfläche des ersten Gelenkelement Eingriffsteile vorgesehen sind, die mit den Nuten eingreifen.

Durch den Eingriff zwischen den Eingriffsteilen und den Nuten wird erreicht, dass bei einer Schwenkbewegung des Bedienholms um dessen Längsachse ein Drehmoment auf die Basis übertragen wird. Dies ist unabhängig davon, wie der Bedienholm gegenüber der Basis verschwenkt ist. Dies ist deswegen möglich, weil erfindungsgemäß schließlich entweder das erste oder das zweite Gelenkelement an der Basis befestigt ist, während das zweite oder das erste Gelenkelement an dem proximalen Ende des Bedienholms angebracht ist.

Bei der erfindungsgemäße Bodenreinigungsmaschine ist das Gelenk gebildet aus dem ersten und dem zweiten Gelenkelement kompakt aufgebaut, da das erste Gelenkelement in dem zweiten Gelenkelement aufgenommen ist, und es wird zudem ermöglicht, ein Drehmoment von dem ersten auf das zweite Gelenkelement damit von den bedienen Holm auf die Basis zu übertragen.

In einer bevorzugten Ausführungsform der vorliegenden Erfindung sind die Nuten bezüglich des Mittelpunktes der Einhüllenden diametral gegenüberliegend an dem einen aus dem ersten und dem zweiten Gelenkelement angeordnet. Demnach verlaufen die erste und die zweite Nut in einer Ebene, die durch den Mittelpunkt der Einhüllenden verläuft. Auf diese Weise können auch größere Drehmomente zuverlässig von dem Bedienholm auf die Basis übertragen werden.

Ferner ist es bevorzugt, wenn das erste und das zweite Eingriffsteil in einer durch den Mittelpunkt der Einhüllenden und senkrecht zu der Längsachse des Bedienholm verlaufenden Mittelebene und einander diametral gegenüberliegend angeordnet sind. Bei dieser Anordnung findet der Eingriff zwischen den Eingriffsteilen und den Nuten in dem größtmöglichen Abstand von der Längsachse des Bedienholms statt, von dem das Drehmoment auf das erste Gelenk übertragen soll. Durch diesen großen Abstand wird die Belastung auf die Eingriffsteile und die Nuten minimiert.

Um zu ermöglichen, dass der Bedienholm in einem möglichst großen Umfang gegenüber der Basis verschwenkt werden kann, ist es bevorzugt, wenn sich die Nuten über mehr als 150° um die Einhüllende erstrecken.

Weiterhin kann in einer bevorzugten Ausführungsform vorgesehen sein, dass das zweite Gelenkelement eine kreisförmige Aufnahmeöffnung mit einem Durchmesser aufweist, der kleiner als der Durchmesser der Einhüllenden ist. Dadurch ist sichergestellt, dass das erste Gelenkelement nicht aus dem zweiten Gelenkelement herausrutschen kann, sondern darin in der schon beschriebenen Weise geführt ist.

In einer weiteren bevorzugten Ausführungsform sind das erste und/oder das zweite Eingriffsteil als Kugel ausgebildet, die ortsfest und drehbar an dem anderen aus dem ersten und dem zweiten Gelenkelement gehaltert sind und in einer der Nuten abrollen können. Auf diese Weise wird die Reibung zwischen dem ersten und dem zweiten Gelenkelement beim Verschwenken des Bedienholms relativ zu der Basis sowie bei einer Schwenkbewegung des Bedienholms um seine Längsachse minimiert.

In einer bevorzugten Ausführungsform sind die kreisabschnittsförmig verlaufenden Nuten an dem ersten Gelenkelement vorgesehen, während das zweite Gelenkelement an seiner Innenwandung das erste Eingriffsteil und das zweite Eingriffsteil aufweist. Weiterhin ist es bevorzugt, wenn das erste Gelenkelement mit der kugelschalenförmigen Einhüllenden an der Basis angebracht ist und das zweite Gelenkelement an dem proximalen Ende des Bedienholms befestigt ist.

Weiterhin ist es bevorzugt, wenn das erste Gelenkelement an der Basis angebracht ist und das zweite Gelenkelement an dem proximalen Ende des Bedienholms angebracht ist.

In einer weiteren bevorzugten Ausführungsform weist das Gelenk eine Verriegelungsanordnung auf, die ausgestaltet ist, dass sie in eine Freigabestellung und eine Verriegelungsstellung verbracht werden kann, wobei in der Freigabestellung eine Schwenkbewegung des zweiten Gelenkelements um das erste Gelenkelement möglich ist und in der Verriegelungsstellung eine Schwenkbewegung des zweiten Gelenkelements um das erste Gelenkelement unmöglich ist. Mittels der Verriegelung an also möglich, den Bedienholm relativ zu der Basis in einer vorgegebenen Position zu verriegeln. Dies erleichtert insbesondere das Abstellen der Bodenreinigungsmaschine, wobei dann der Bedienholm in einer vorgegebenen Position verbleibt.

In weiter bevorzugter Weise weist dazu eines aus dem ersten und dem zweiten Gelenkelement eine Aufnahmeaussparung auf, deren Öffnung sich hin zu der Einhüllenden erstreckt, wobei an dem anderen aus dem ersten und dem zweiten Gelenkelement ein Riegelelement vorgesehen ist, dass in einer Richtung, die senkrecht zu der Einhüllenden verläuft, gegenüber dem anderen aus dem ersten und dem zweiten Gelenkelement verschiebbar ist, sodass es sich in der Freigabestellung nicht über die Einhüllende hinaus hin zu dem einen aus dem ersten und dem zweiten Gelenkelement erstreckt und es sich in der Verriegelungsstellung über die Einhüllende hinaus hin zu dem einen aus dem ersten und dem zweiten Gelenkelement in die Aufnahmeaussparung erstreckt. Durch die Lage der Aufnahmeaussparung in dem einen aus dem ersten und dem zweiten Gelenkelement wird die Schwenkposition festgelegt, in der der Bedienholm relativ zu der Basis verriegelt werden kann.

Hierbei ist es insbesondere bevorzugt, wenn das verschiebbare Riegelelement an dem zweiten Gelenkelement vorgesehen und entlang der Längsachse, entlang derer sich der Bedienholm erstreckt, relativ zu diesem verschiebbar ist. Die Aufnahmeaussparung ist dann in dem ersten Gelenkelement, dessen Einhüllende kugelschalenförmig ist, vorgesehen. Dann kann der Betätigungsmechanismus für die Verriegelungsanordnung vergleichsweise einfach ausgestaltet werden. Es ist dann nur erforderlich, eine Betätigungsstange oder einen Bowdenzug entlang der Längsachse des Bedienholms hin zu dessen Betätigungsende zu führen.

In einer weiteren bevorzugten Ausführungsform weist das wenigstens eine Eingriffsteil des wenigstens einen Reinigungselements ein freies Ende auf, wobei das wenigstens eine freie Ende eine Reinigungsebene definiert, in der das wenigstens eine Eingriffsteil mit der Bodenfläche eingreift, wobei der Bedienholm relativ zu der Basis in eine Vertikalstellung verschwenkbar ist, in der sich die Längsachse des Bedienholms nach oben weg von, vorzugsweise senkrecht zu, der Reinigungsebene erstreckt. In weiter bevorzugter Weise ist in der Verriegelungsstellung der Bedienholm in der Vertikalstellung. In dieser Ausgestaltung kann der Bedienholm relativ zu der Basis mittels der Verriegelungsanordnung so verriegelt werden, dass sich der Bedienholm in einer im Wesentlichen vertikalen Richtung erstreckt. Dies ist insbesondere von Vorteil, wenn die erfindungsgemäße Bodenreinigungsmaschine, wenn sie nicht in Betrieb ist, transportiert oder abgestellt werden soll.

Schließlich kann in einer weiteren bevorzugten Ausführungsform die Bodenreinigungsmaschine derart ausgebildet sein, im Reinigungsbetrieb in einer Hauptarbeitsrichtung über die zu reinigende Bodenfläche bewegt zu werden, wobei ein Vorspannelement vorgesehen ist, das ausgestaltet ist, den Bedienholm in einer aus der Vertikalstellung entgegen der Hauptarbeitsrichtung verschwenkten Stellung mit einer Kraft hin zu der Vertikalstellung zu beaufschlagen. Wenn also der Bedienholm aus der Vertikalstellung in eine Richtung verschwenkt wird, die entgegengesetzt zu der Hauptarbeitsrichtung ist, bewirkt das Vorspannelement, dass der Bedienholm mit einer Kraft beaufschlagt wird, die diesen zurück in Richtung der Vertikalstellung drückt. Dadurch wird für einen Benutzer die Kraft reduziert, die er aufwenden muss, um den Bedienholm während des Normalbetriebs in einer geneigten Stellung zu halten. Denn ohne das Vorspannelement müsste der Benutzer das gesamte durch das Gewicht des Bedienholms hervorgerufene Drehmoment aufnehmen, um den Bedienholm daran zu hindern, weiter nach unten hin zu der zu reinigenden Bodenfläche zu schwenken. Das Vorspannelement kann als eine Druckfeder ausgebildet sein, die komprimiert wird, wenn der Bedienholm entgegen der Hauptarbeitsrecht verschwenkt wird. Alternativ ist es auch denkbar, dass das Vorspannelement als ein elastisches Zugelement ausgebildet ist, dass gespannt wird, wenn der Bedienholm entgegen der Hauptarbeit aus der Vertikalstellung heraus verschwenkt wird.

In einer weiteren bevorzugten Ausführungsform ist das Vorspannelement als ein mit einem ersten Ende am Bedienholm befestigtes Federelement ausgebildet ist, dessen zweites Ende mit einem Gurtelement verbunden ist, wobei das Gurtelement an der in die Hauptarbeitsrichtung weisenden Seite des Gelenks von dem Bedienholm zu der Basis geführt und an der Basis befestigt ist. Wenn bei dieser Ausführungsform der Bedienholm entgegen der Hauptarbeitsrichtung nach hinten verschwenkt wird, verlängert sich der Abstand zwischen dem Anlenkpunkt des Gurtelements an der Basis und dem Punkt, an dem das Gurtelement an dem Federelement angebracht ist. Dies wiederum führt dazu, dass das Federelement auseinandergezogen wird, was umgekehrt eine Kraft erzeugt, die den Bedienholm zurück in die Vertikalstellung drückt. Auf diese Weise wird das Drehmoment reduziert, das von einem Benutzer aufgebracht werden muss, um den Bedienholm daran zu hindern, vollständig hin zu der Bodenfläche nach unten zu schwenken.

Darüber hinaus ist es vorteilhaft, wenn das Gurtelement beabstandet von dem Gelenk an der Basis befestigt ist und beabstandet von dem Befestigungspunkt verschiebbar an der Basis durch eine Führung geführt ist. Dies ermöglicht, dass ein Benutzer den Abschnitt des Gurtelements zwischen dem Befestigungspunkt und der Führung ergreift und dadurch ein Griffabschnitt gebildet wird, der es ermöglicht, die Basis einfach anzuheben.

An dieser Stelle ist darauf hinzuweisen, dass das Konzept eines Gurtelements, dessen eines Ende an der Basis angelegt ist, das auf einer in Hauptarbeitsrichtung weisenden Seite um das Gelenk zwischen Basis und Bedienholm zu dem Bedienholm geführt ist und das an dem freien Ende eines Federelements befestigt ist, dessen weiteres Ende an dem Bedienholm an gelenkt ist, ein selbstständig erfinderisches Konzept darstellt. Dieses kann allgemein bei Bodenreinigungsmaschinen mit Basis und Bedienholm verwendet werden, wobei der Bedienholm über ein Gelenk an der Basis angebracht ist. Dieses Konzept ist nicht auf die Verwendung mit dem zuvor beschriebenen Gelenk Aufbauten beschränkt.

Die vorliegende Erfindung wird im Folgenden anhand einer lediglich ein bevorzugtes Ausführungsbeispiel zeigenden Zeichnung näher erläutert, wobei
- Figur 1: eine erste perspektivische Seitenansicht eines Ausführungsbeispiels einer Bodenreinigungsmaschine gemäß der vorliegenden Erfindung zeigt,
- Figur 2: eine zweite perspektivische Seitenansicht des Ausführungsbeispiels aus Figur 1 zeigt,
- Figur 3: eine teilweise Seitenansicht des Gelenks des Ausführungsbeispiels aus Figur 1 zeigt,
- Figur 4: eine erste Schnittansicht des Gelenks des Ausführungsbeispiels aus Figur 1 zeigt,
- Figur 5: eine zweite Schnittansicht des Gelenks des Ausführungsbeispiels aus Figur 2 zeigt,
- Figur 6: Seitenansichten des Gelenks des Ausführungsbeispiels aus Figur 1 in unterschiedlichen Schwenkpositionen zeigt,
- Figur 7: Seitenansichten des Gelenks des Ausführungsbeispiels aus Figur 1 in einer ersten Ausgestaltung in unterschiedlichen Schwenkpositionen zeigt,
- Figur 8: Seitenansichten des Gelenks des Ausführungsbeispiels aus Figur 1 in einer zweiten Ausgestaltung in unterschiedlichen Schwenkpositionen zeigt und
- Figur 9: eine Seitenansicht und eine perspektivische Darstellung des Ausführungsbeispiels aus Figur 1 in einer dritten Ausgestaltung zeigt.

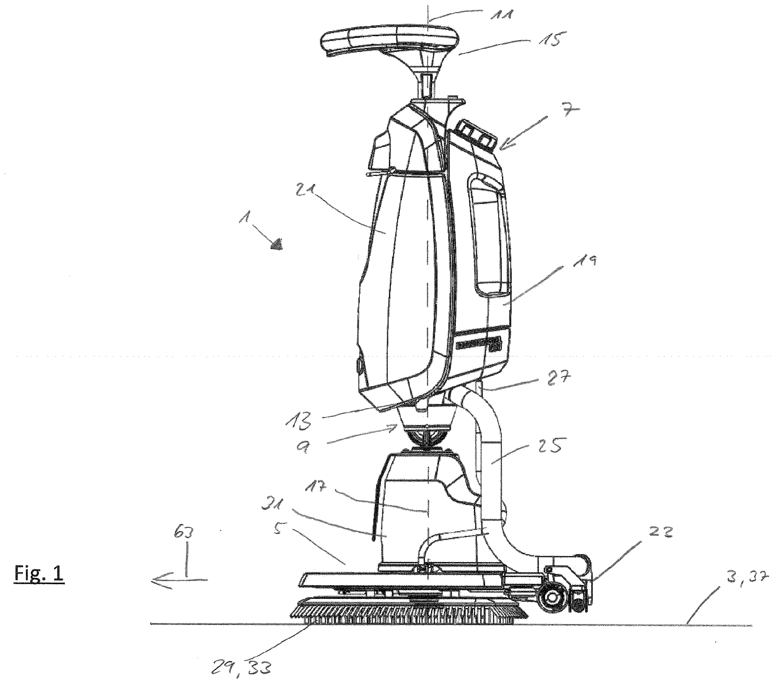

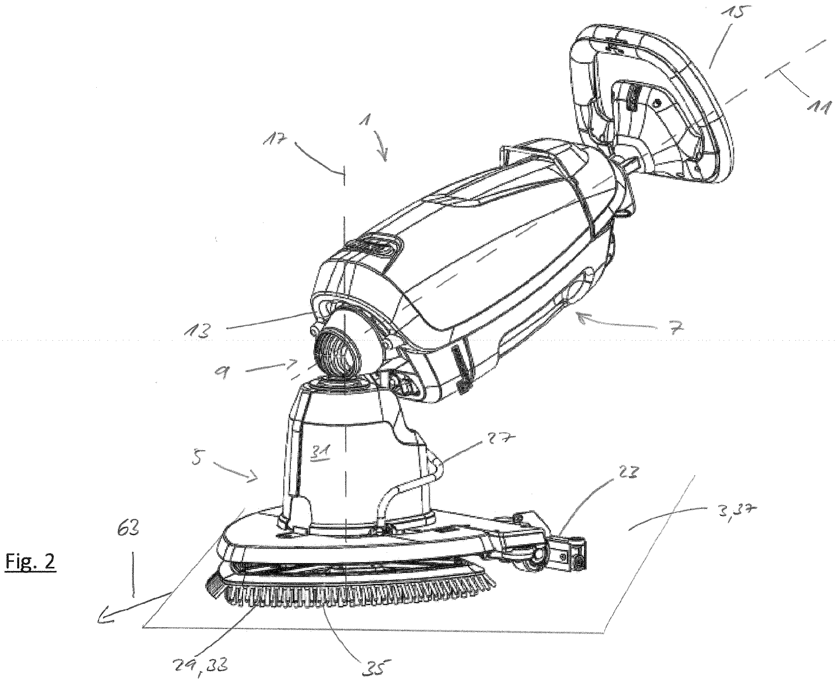

In den Figuren 1 und 2 ist ein Ausführungsbeispiel einer Bodenreinigungsmaschine 1 gemäß der vorliegenden Erfindung dargestellt, die hier eine handgeführte Scheuersaugmaschine ausgebildet und mit einer Reinigungselementanordnung versehen ist, mit der Reinigungsflüssigkeit auf die Bodenfläche 3 (siehe Figur 1 und 2) aufgebracht werden kann und die Reinigungselemente zum Eingriff mit der zu reinigenden Bodenfläche 3 aufweist. Ferner ist die Scheuersaugmaschine mit einem Saugfuß versehen, mit dem Scheuerrückstände einschließlich der Reinigungsflüssigkeit wieder abgesaugt werden können. Das hier beschriebene Ausführungsbeispiel einer Bodenreinigungsmaschine 1 weist einen nachfolgend noch im Detail beschriebenen, an einer Basis 5 der Bodenreinigungsmaschine 1 angebrachten Bedienholm 7 auf, wobei der Bedienholm 7 über ein Gelenk 9 schwenkbar an der Basis 5 angebracht ist.

Das hier beschriebene Ausführungsbeispiel einer erfindungsgemäßen Bodenreinigungsmaschine 1 umfasst wie bereits erwähnt die Basis 5, an der über ein Gelenk 9, das nachfolgend noch genauer beschrieben wird, der Bedienholm 7 angebracht ist. Der Bedienholm 7 erstreckt sich dabei von dem Gelenk 9, über das er schwenkbar mit der Basis 5 verbunden ist, entlang einer Längsachse 11 von einem proximalen Ende 13 zu einem Betätigungsende 15, wobei das proximale Ende 13 des Bedienholms 7 benachbart zu dem Gelenk 9 vorgesehen und mit diesem verbunden ist. Das Gelenk 9 ist dabei derart ausgestaltet, dass dann, wenn der Bedienholm 7 um die Längsachse 11 verschwenkt oder gedreht wird, ein Drehmoment auf die Basis 5 ausgeübt wird, sodass diese um eine Hochachse 17 gegenüber der Bodenfläche 3 verschwenkt wird, wobei die Hochachse 17 senkrecht zu der Bodenfläche 3 verläuft. Das Gelenk 9 ermöglicht also aufgrund seines Aufbaus, dass ein Benutzer, der den Bedienholm 7 an dessen Betätigungsende 15 ergreift, die Basis 5 lenken kann. Die genaue Ausgestaltung des Gelenks wird nachfolgend noch beschrieben.

An dem Bedienholm 7 sind ein Reinigungsflüssigkeitsbehälter 19 sowie ein Schmutzwassertank 21 lösbar angebracht, die mit der Basis 5 sowie einem schwenkbar an der Basis 5 gehalterten Saugfuß 23 über Leitungen 25, 27 verbunden sind. Dabei kann der Saugfuß 23 zwischen der in den Figuren gezeigten Stellung, in der er der zu reinigenden Bodenfläche 3 gegenüberliegt, und einer hochgeklappten Stellung, in der er von der Bodenfläche 3 beabstandet ist, verschwenkt werden.

Schließlich ist auf der zu der zu reinigenden Bodenfläche 3 weisenden Unterseite der Basis 5 eine Reinigungselementanordnung 29 vorgesehen (siehe Figuren 1 und 2), die ausgestaltet ist, mit der zu reinigenden Bodenfläche 3 einzugreifen, wobei die Reinigungselementanordnung 29 durch einen in einem Gehäuse 31 an der Basis 5 angeordneten Antriebsmotor (nicht dargestellt) angetrieben ist. Bei dem Antriebsmotor kann es sich beispielsweise um einen Elektromotor handeln, der von einer in den Figuren nicht dargestellten und an der Basis 5 oder dem Bedienholm 7 angebrachten Batterieeinheit versorgt wird. Die vorliegende Erfindung ist aber nicht auf Elektromotoren beschränkt, und es ist grundsätzlich auch möglich, dass der Antriebsmotor mit Druckluft angetrieben wird. Dies kann dann der Fall sein, wenn die Bodenreinigungsmaschine als Zusatzgerät an einer selbstfahrenden Maschine verwendet wird.

In dem Gehäuse 31 der Basis 5 ist ferner eine Saugturbine (nicht dargestellt) angeordnet, deren Saugseite mit dem oberen Ende des Schmutzwassertanks 21 verbunden ist. Der Schmutzwassertank 21 wiederum ist über die Leitung 25 mit dem Saugfuß 23 verbunden. Die Saugturbine bildet eine Saugeinrichtung, mit deren Hilfe ein Saugluftstrom von dem Saugfuß 23 in den Schmutzwassertank 21 erzeugt wird, sodass Reinigungsflüssigkeit von der zu reinigenden Bodenfläche 3 abgesaugt werden kann. Weiter sind an der Basis 5 zusätzliche Leitungen 27 vorgesehen, über die Reinigungsflüssigkeit aus dem Reinigungsflüssigkeitsbehälter 19 durch die Basis 5 hindurch in den Bereich der Reinigungselementanordnung 29 und dabei auf die zu reinigende Bodenfläche 3 aufgebracht werden kann.

Die Reinigungselementanordnung 29 weist bei dem hier gezeigten bevorzugten Ausführungsbeispiel zwei angetriebene Reinigungselemente 33 auf, die in nicht dargestellter Weise so angebracht sind, dass ein äußeres Reinigungselement ein inneres umgibt und die Reinigungselemente 33 derart angetrieben sind, dass sie gegeneinander um 180° phasenverschobene Orbitalbewegungen ausführen. Durch diese Art des Antriebs wird erreicht, dass die Reinigungselemente gemeinsam keinen auf die Basis 5 wirkenden Vortrieb relativ zu der zu reinigenden Bodenfläche 3 erzeugen, wenn sie bewegt werden. Die Reinigungselements 33 sind im vorliegenden Ausführungsbeispiel als Bürstenelemente ausgestaltet, sodass sich von einem Grundkörper jeweils Eingriffselemente in Form von Borsten 35 weg erstrecken, wobei die freien Enden der Borsten 35 mit der zu reinigenden Bodenfläche 3 eingreifen und die freien Enden somit eine Reinigungsebene 37 definieren, die mit der Ebene der Bodenfläche 3 zusammenfällt. Damit erstreckt sich auch die Hochachse 17 senkrecht zu der Reinigungsebene 37.

Bei dem hier beschriebenen Ausführungsbeispiel sind die Eingriffselemente als Borsten 35 ausgebildet, und den Reinigungselemente sind als Bürsten vorgesehen. Es ist allerdings auch denkbar, dass andere Arten von Reinigungselementen verwendet werden. So können beispielsweise Pads verwendet werden, die angetrieben sind und deren zu der zu reinigenden Bodenfläche 3 bzw. sich in der Reinigungsebene 37 erstreckende Flächen die Eingriffselemente bilden. Insbesondere ist die vorliegende Erfindung nicht auf die Verwendung von Bürsten beschränkt.

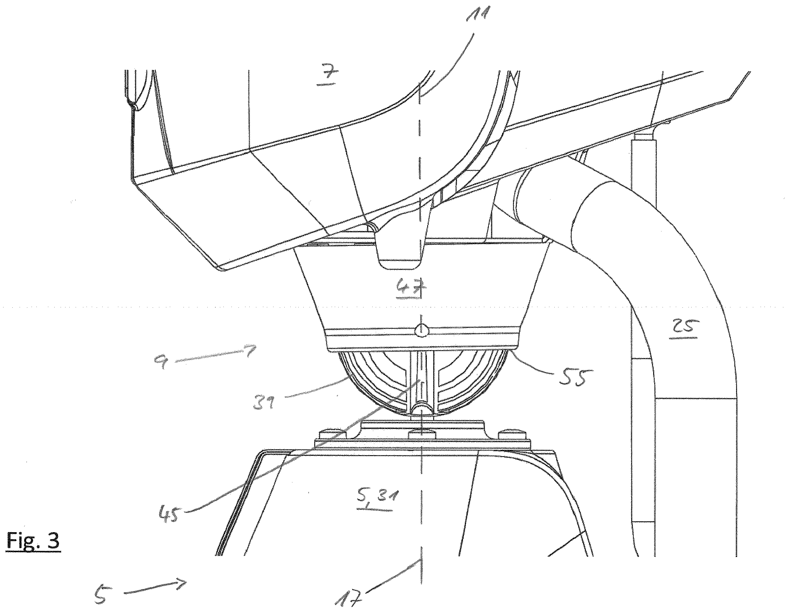

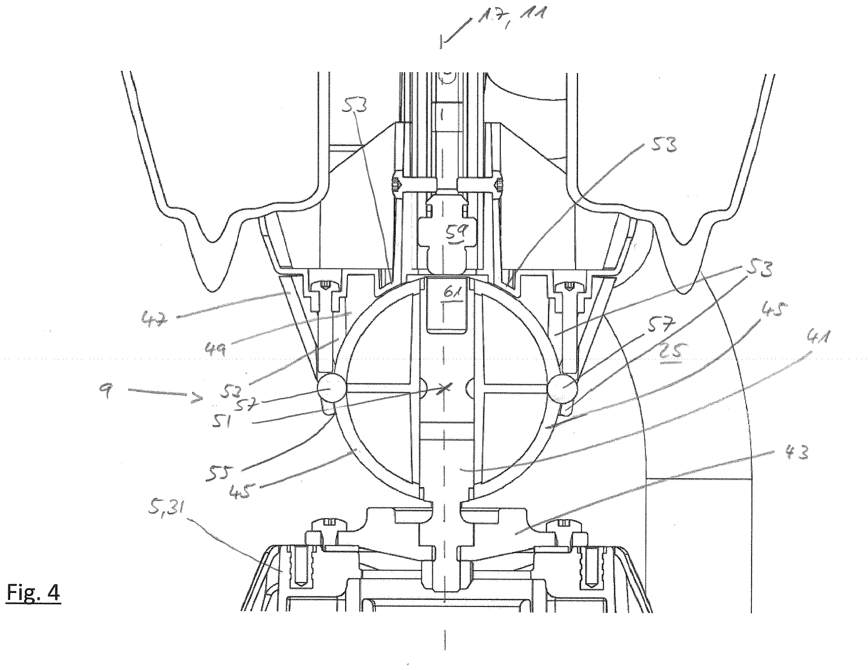

Im Folgenden wird nun der Aufbau des Gelenks 9 beschrieben, über das die Basis 5 und der Bedienholm 7 schwenkbar miteinander gekoppelt werden, wobei der hier vorgesehene Aufbau des Gelenks 9 zum einen sehr kompakt ist und zum anderen die schon beschriebene Übertragung eines Drehmoments von dem Bedienholm 7 auf die Basis 5 ermöglichen, sodass Letztere um die Hochachse 17 schwenken kann. Dabei ist den Figuren 3 und 4 zu entnehmen, dass an dem oberen zu dem Bedienholm 7 weisenden Ende des Gehäuses 31 ein erstes Gelenkelement 39 befestigt ist, wobei dieses erste Gelenkelement 39 derart ausgebildet ist, dass eine das erste Gelenkelement 39 umschließende Einhüllende kugelschalenförmig ausgebildet ist. Dies bedeutet, dass das erste Gelenkelement 39 selbst kugelförmig sein kann. Umfasst ist aber auch, dass das erste Gelenkelement 39 beispielsweise aus einer Vielzahl von parallel zueinander angeordneten Scheiben gebildet wird, deren Außenkanten kreisabschnittsförmig mit unterschiedlichen Durchmessern verlaufen, sodass die Einhüllende insgesamt kugelschalenförmig ist.

In dem hier beschriebenen Ausführungsbeispiel weist das erste Gelenkelement 39 einen sich entlang parallel zu der Hochachse 17 erstreckenden Ansatz 41 auf, der von einem an dem Gehäuse 31 befestigt Alter 43 aufgenommen ist.

Weiter ist insbesondere der Figur 3 zu entnehmen, dass das erste Gelenkelement 39 zu der Einhüllenden hin geöffnete kreisabschnittsförmig verlaufende Nuten 45 aufweist, die in dem hier beschriebenen Ausführungsbeispiel relativ zu dem Mittelpunkt des ersten Gelenkelements 39 und deren Einhüllender einander diametral gegenüberliegend angeordnet sind und entlang der Einhüllende verlaufen. Ferner erstreckt sich jede der Nuten 45 in Bezug auf den Mittelpunkt der Einhüllenden des ersten Gelenkelement 39 über mehr als 150°, im vorliegenden Fall sogar über 180°.

Weiterhin weist das Gelenk 9 ein zweites Gelenkelement 47 auf, das an dem proximalen Ende 13 des Bedienholms angebracht ist und einen Hohlraum 49 begrenzt, in dem das erste Gelenkelement 39 aufgenommen ist. Dabei ist der Hohlraum 49 derart ausgebildet, dass das erste Gelenkelement 39 darin so abgestützt ist, dass es um einen in Bezug auf das zweite Gelenkelement 47 ortsfesten Schwenkpunkt 51 verschwenkt werden kann, wobei der Schwenkpunkte 51 mit dem Mittelpunkt der Einhüllende des ersten Gelenkelement 39 zusammenfällt. Außerdem ist die Abstützung des ersten Gelenkelements 39 innerhalb des zweiten Gelenkelements 47 derart, dass das erste Gelenkelement 39 und insbesondere dessen Mittelpunkt nicht gegenüber den zweiten Gelenkelement 47 verschoben werden können. Das erste Gelenkelement 39 ist somit unverlagerbar in dem zweiten Gelenkelement 47 aufgenommen. Dazu ist es dazu nicht zwingend erforderlich, dass die nach innen weisende Oberfläche des zweiten Gelenkelements 47, die den Hohlraum 49 begrenzt, kugelschalenförmig ausgebildet ist. Es ist vielmehr ausreichend, wenn im Inneren des zweiten Gelenkelement 47 hinreichend große Stützelemente 53 vorgesehen sind, die zum einen die Schwenkbewegung um den Schwenkpunkt 51 gewährleisten und zum anderen sicherstellen, dass das erste Gelenkelement 39 unverlagerbar aufgenommen ist. Dazu ist auch vorgesehen, dass das zweite Gelenkelement 47 eine kreisförmige Aufnahmeöffnung 55 aufweist, deren Durchmesser kleiner ist als der Durchmesser der Einhüllende des ersten Gelenkelement 39. Dadurch wird bereits verhindert, dass sich das erste Gelenkelement 39 aus dem Hohlraum 49 heraus bewegen kann.

Ferner sind an dem zweiten Gelenkelement 47 an der nach innen zu dem Hohlraum 49 weisenden Oberfläche Eingriffsteile in Form von drehbar gehalterten Kugeln 57 vorgesehen, die sich in die Nuten 45 in dem ersten Gelenkelement 39 hinein erstrecken. Die Kugeln 57 sind somit ortsfest in dem zweiten Gelenkelement 47 gehaltert und können in den Nuten 45 abrollen. Außerdem sind die Kugeln 57 bei diesem Ausführungsbeispiel in einer durch den Mittelpunkt der Einhüllende bzw. den Schwenkpunkt 51 und senkrecht zu der Längsachse 11 des Bedienholms 7 verlaufenden Mittelebene angeordnet. Darüber hinaus sind sie, wie die Nuten 47 auch, diametral gegenüberliegend relativ zu dem Schwenkpunkt 51 bzw. Mittelpunkt der Einhüllenden angebracht.

Es sind aber auch andere, davon abweichende Anordnungen der Kugeln 57 in dem zweiten Gelenkelement 47 denkbar. Darüber hinaus ist es auch möglich, dass die Eingriffsteile bzw. die Kugeln 57 an dem ersten Gelenkelement 39 gehaltert sind, während die Nuten 45 in der nach innen weisenden Fläche des zweiten Gelenkelements 47 vorgesehen sind.

Durch den Eingriff der Eingriffsteile in Form der Kugeln 57 mit den Nuten 45 wird sichergestellt, dass auch bei gegenüber der Hochachse 17 verschwenkter Längsachse 11 des Bedienholms 7 bei einer Schwenkbewegung des Bedienholms 7 um die Längsachse 11 ein Drehmoment von dem Bedienholm 7 auf die Basis 5 übertragen wird, wobei das übertragene Drehmoment eine Schwenkbewegung der Basis 5 um die Hochachse 17 bewirkt. Dadurch, dass die Kugeln 57 drehbar in dem zweiten Gelenkelement 47 gehaltert sind und in den Nuten 45 abrollen können, ist die bei einer solchen Schwenkbewegung des Bedienholms 7 um dessen Längsachse 11 auftretende Reibung vergleichsweise gering. Die Basis 5 lässt sich somit von einem an dem Betätigungsende 15 angreifenden Benutzer leicht steuern.

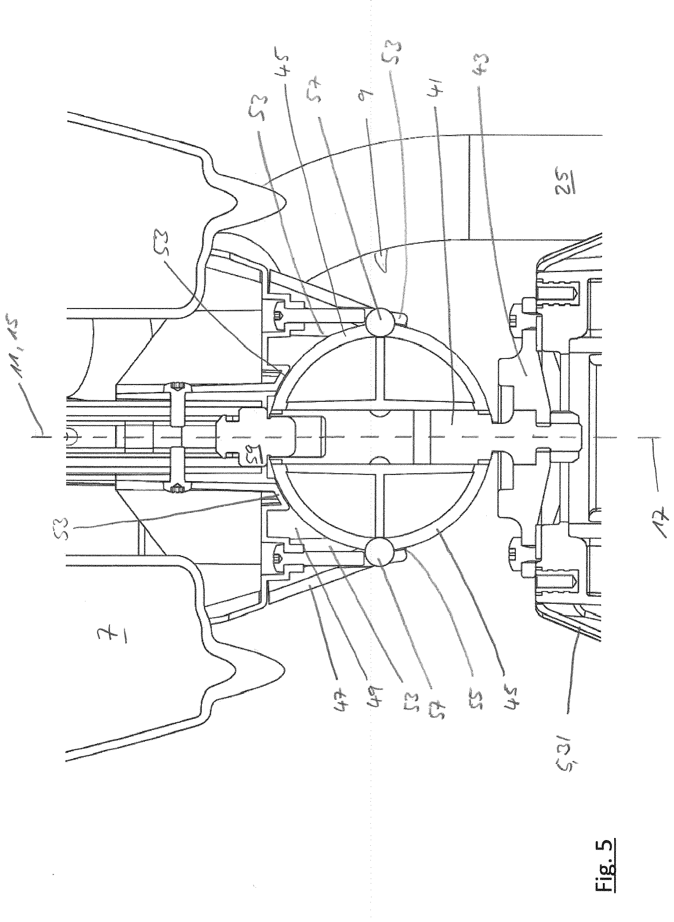

Wie schließlich den Figuren 4 und 5 zu entnehmen ist, weist das Gelenk 9 eine Verriegelungsanordnung auf, mit der der Bedienholm 7, wenn die Verriegelungsanordnung in der Verriegelungsstellung ist, in einer definierten Position relativ zu der Basis 5 verriegelt werden kann. In dem hier beschriebenen bevorzugten Ausführungsbeispiel ist die Position, in der der Bedienholm 7 verriegelt werden kann, derart gewählt, dass der Bedienholm 7 sich dann mit seiner Längsachse 11 derart erstreckt, dass die Längsachse 11 parallel zu einer senkrecht auf der Reinigungsebene 37 bzw. der Bodenfläche 3 stehenden Achse verläuft. In der verriegelten Stellung des Bedienholms 7 erstreckt sich dessen Längsachse 11 also auch parallel zu der Hochachse 17 und befindet sich damit in einer Vertikalstellung. Wenn die Verriegelungsanordnung in der Freigabestellung ist, kann der Bedienholm 7 ungehindert relativ zu der Basis fünf verschwenkt werden.

In dem hier beschriebenen Ausführungsbeispiel weist die Verriegelungsanordnung ein Riegelelement 59 auf, dass derart an dem zweiten Gelenkelement 47 gehaltert ist, dass es entlang der Längsachse 11 des Bedienholms 7 und damit senkrecht zu der Einhüllenden des ersten Gelenkelement 39 zwischen einer Freigabestellung (siehe Figur 4) und einer Verriegelungsstellung (siehe Figur 5) verschiebbar ist, wobei diese Verschiebung durch ein an dem Betätigungsfeld 15 des Bedienholms 7 (nicht dargestellt) vorgesehenes Betätigungselement bewirkt werden kann. Dazu kann das Betätigungselement über eine Betätigungsstange oder einen Bowdenzug (nicht dargestellt) mit dem Riegelelement 59 gekoppelt sein.

Wenn der Bedienholm 7, wie in den Figuren 4 und 5 gezeigt, in der Vertikalstellung ist, in der sich die Längsachse 11 des Bedienholms 7 parallel zu der Hochachse 17 bzw. einer sich senkrecht zu der Reinigungsebene 37 erstreckenden Achse erstreckt, liegt das Riegelelement 59 einer Aufnahmeaussparung 61 in dem ersten Gelenkelement 39 gegenüber, wenn das Riegelelement 59 in der Freigabestellung ist. Wenn das Riegelelement 59 jedoch eine Verriegelungsstellung überführt wird, kann es sich in die Aufnahmeaussparung 61 hinein erstrecken, was nur dann möglich ist, wenn der Bedienholm 7 in der schon beschriebenen Vertikalstellung ist. Erstreckt sich das Riegelelement 59 in die Aufnahmeaussparung 61 hinein, wird der Bedienholm 7 an einer Schwenkbewegung aus der Vertikalstellung heraus gehindert.

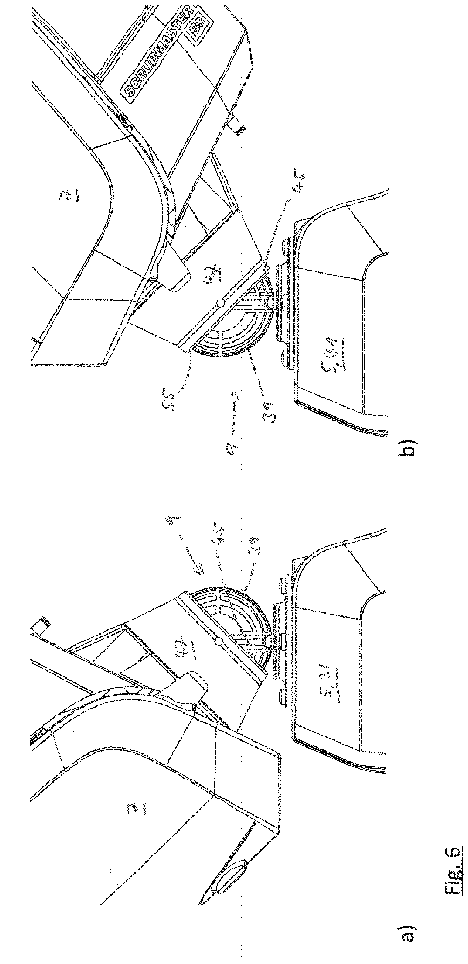

Figur 6 geht hervor, dass dann, wenn die Verriegelungsanordnung in der Freigabestellung ist, also das Riegelelement 59 sich nicht in die Aufnahmeaussparung 61 hinein erstreckt, der Bedienholm 7 beliebig gegenüber der Basis 5 verschwenkt werden kann.

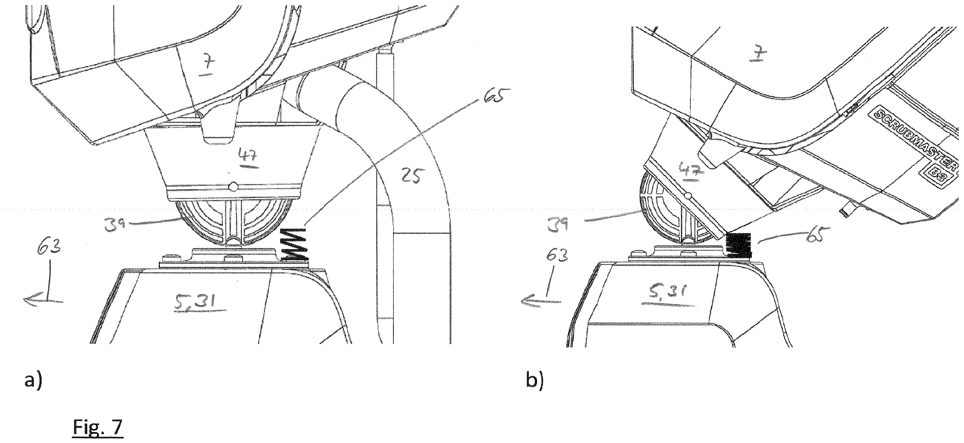

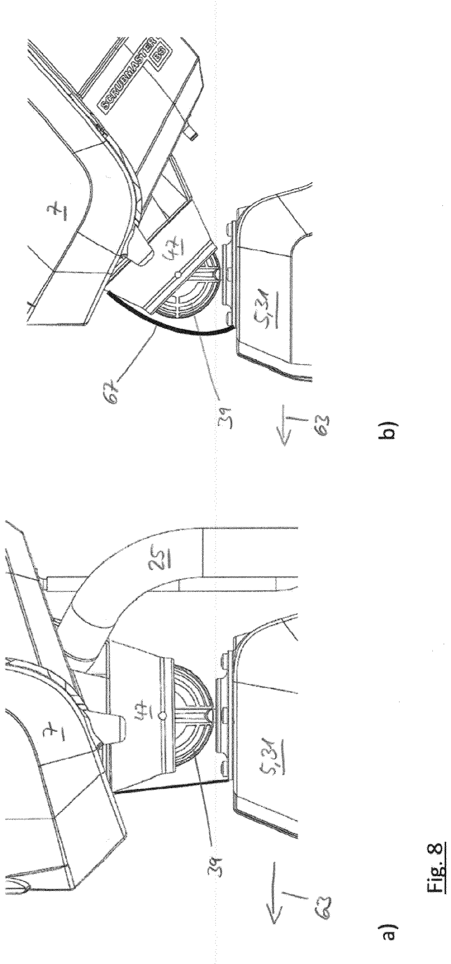

Nachfolgend werden unter Bezugnahme auf die Figuren 7 und 8 noch zwei Alternativen für eine Ergänzung des zuvor beschriebenen Ausführungsbeispiels erläutert.

In Figur 1 und 2 ist durch den Pfeil 63 einen Hauptarbeitsrichtung der Bodenreinigungsmaschine 1 gekennzeichnet. Die Hauptarbeitsrichtung 63 ist die derjenige Richtung, entlang derer die Bodenreinigungsmaschine 1 im Normalbetrieb über die zu reinigende Bodenfläche 3 bewegt wird, sodass diese Richtung 63 die Geradeaus-Richtung im Betrieb angibt. In Figur 7 ist nun zu erkennen, dass auf der der Hauptarbeitsrichtung 63 entgegengesetzten oder abgewandten Seite des Gelenks 9 bzw. des ersten Gelenkelements 39 eine Druckfeder 65 an dem Gehäuse 31 der Basis 5 angeordnet ist, wobei dann, wenn der Bedienholm 7 entgegen der Hauptarbeitsrichtung 63 gegenüber der Basis 5 verschwenkt wird, die Druckfeder 65 zur Anlage mit dem zweiten Gelenkelement 47 kommt. Dadurch wirkt die Druckfeder 65 als Vorspannelement, das den Bedienholm 7 in der dargestellten, aus der Vertikalstellung entgegen der Hauptarbeitsrichtung 63 verschwenkten Stellung mit einer Kraft hin zu der Vertikalstellung beaufschlagt. Auf diese Weise wird erreicht, dass dann, wenn der Bedienholm 7, wie in Figur 7b) gezeigt, nach hinten zu dem Benutzer verschwenkt ist, dieser nicht mehr die gesamte Gewichtskraft des Bedienholms 7 halten muss, sondern dabei vielmehr durch die Druckfeder 65 unterstützt wird.

In Figur 8 ist eine alternative Ausführungsform für ein Vorspannelement dargestellt, das die Kraft, die ein Benutzer aufbringen muss, um den Bedienholm 7 in einer aus der Vertikalstellung heraus nach hinten entgegen der Hauptarbeitsrichtung 63 verschwenkten Stellung zu halten, reduziert. Dabei ist ein elastisches Zugelement 67 vorgesehen, dass, wie Figur 8b) zeigt, gedehnt wird, wenn der Bedienholm 7 entgegen der Hauptarbeitsrichtung 63 aus der Vertikalstellung heraus verschwenkt wird. Auch bei dieser Ausführungsform wird dann eine Kraft auf den Bedienholm 7 ausgeübt, durch die dieser hin zu der Vertikalstellung gezogen wird, was wiederum die Kraft reduziert, die ein Benutzer aufbringen muss, um den Bedienholm 7 entgegen der Wirkung der Schwerkraft in der geneigten Stellung zu halten.

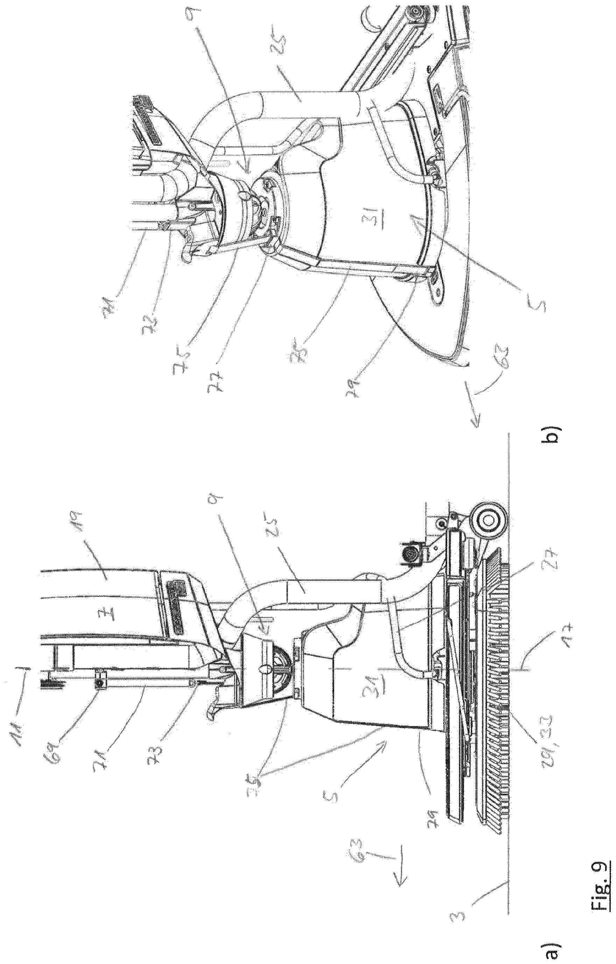

Figur 9 zeigt eine weitere bevorzugte Ausgestaltung einer Anordnung mit einem Vorspannelement in Seitenansicht (Teil a)) und in perspektivischer Darstellung (Teil b)).

In dieser Ausgestaltung ist das Vorspannelement als ein mit einem ersten Ende 69 am Bedienholm 7 befestigtes Federelement 71 wie einer Schraubenfeder ausgebildet, dessen zweites Ende 73 mit einem Gurtelement 75 verbunden ist. Das Gurtelement 75 ist entlang der in die Hauptarbeitsrichtung 63 weisenden Seite des Gelenks 9 von dem Bedienholm 7 zu der Basis 5 geführt. Dabei ist das Gurtelement 75 benachbart zu dem Gelenk 9 durch ein Führungselement 77 geführt, wobei die Führung darin derart ist, dass das Gurtelement 75 durch das Führungselement 77 hindurchgleiten kann und damit verschiebbar zu dem Führungselement 77 ist. Ferner ist das Gurtelement 75 mit einem Befestigungsende 79 an der Basis 5 und in diesem Fall an deren Gehäuse 31 befestigt. Zwischen dem Befestigungsende 79 und dem Führungselement 77 ist das Gurtelement 75 jedoch nicht an der Basis 5 oder deren Gehäuse 31 befestigt. Daher ist es möglich, das Gurtelement 75 in diesem Abschnitt zwischen dem Befestigungsende 79 und dem Führungselement 77 zu ergreifen und von dem Gehäuse 31 wegzuziehen, wobei dann das Federelement 71 gedehnt wird. Auf diese Weise wird dann eine Griffschlaufe gebildet, durch die ein Benutzer insbesondere die Basis 5 leicht anheben kann.

Wenn bei dieser Ausgestaltung der Bedienholm 7 entgegen der Hauptarbeitsrichtung 63 nach hinten verschwenkt wird, verlängert sich der Abstand zwischen dem Anlenkpunkt des Gurtelements 75 an der Basis 5, also dem Befestigungsende 79 an dem Gehäuse 31, und dem Punkt, an dem das Gurtelement 75 an dem Federelement 71 angebracht ist. Dies wiederum führt dazu, dass das Federelement 71 auseinandergezogen wird, was umgekehrt eine Kraft erzeugt, die den Bedienholm 7 zurück in die Vertikalstellung drückt. Auf diese Weise wird das Drehmoment reduziert, das von einem Benutzer aufgebracht werden muss, um den Bedienholm 7 daran zu hindern, vollständig hin zu der Bodenfläche 3 nach unten zu schwenken.

Hier wird noch einmal darauf hingewiesen, dass das Konzept eines Gurtelements, dessen eines Ende 79 an der Basis 5 angelegt ist, das auf einer in Hauptarbeitsrichtung 63 weisenden Seite um das Gelenk 9 zwischen Basis 5 und Bedienholm 7 zu dem Bedienholm 7 geführt ist und das an dem freien Ende 73 eines Federelements 71 befestigt ist, dessen weiteres Ende 69 an dem Bedienholm 7 angelenkt ist, ein selbstständig erfinderisches Konzept darstellt. Dieses kann allgemein bei Bodenreinigungsmaschinen mit Basis und Bedienholm verwendet werden, wobei der Bedienholm über ein Gelenk an der Basis angebracht ist. Dieses Konzept ist damit nicht auf die Verwendung mit dem zuvor beschriebenen Gelenkaufbau beschränkt.

Wie sich aus dem Vorstehenden ergibt, ist die erfindungsgemäße Bodenreinigungsmaschine 1 mit dem Gelenk 9 derart aufgebaut, dass das Gelenk 9 kompakt ist und gleichzeitig eine Übertragung eines Drehmoments um die Längsachse 11 des Bedienholms 7 auf die Basis 5 ermöglicht.

### Bezugszeichenliste:

- 1: Bodenreinigungsmaschine
- 3: Bodenfläche
- 5: Basis
- 7: Bedienholm
- 9: Gelenk
- 11: Längsachse
- 13: proximales Ende
- 15: Betätigungsende
- 17: Hochachse
- 19: Reinigungsflüssigkeitsbehälter
- 21: Schmutzwassertank
- 23: Saugfuß
- 25,27: Leitung
- 29: Reinigungselementanordnung
- 31: Gehäuse
- 33: Reinigungselement
- 35: Borsten
- 37: Reinigungsebene
- 39: erstes Gelenkelement
- 41: Ansatz
- 43: Halter
- 45: Nut
- 47: zweites Gelenkelement
- 49: Hohlraum
- 51: Schwenkpunkt
- 53: Stützelement
- 55: Aufnahmeöffnung
- 57: Kugel
- 59: Riegelelement
- 61: Aufnahmeaussparung
- 63: Hauptarbeitsrichtung
- 65: Druckfeder
- 67: Zugelement
- 69: erstes Ende
- 71: Federelement
- 73: zweites Ende
- 75: Gurtelement
- 77: Führungselement
- 79: Befestigungsende

## Patentansprüche

1. Bodenreinigungsmaschine (1) mit
einer Basis (5) und
einem Bedienholm (7),
wobei die Basis (5) eine Reinigungselementanordnung (27) mit wenigstens einem angetriebenen Reinigungselement (33) aufweist, an dem wenigstens ein Eingriffselement (35) vorgesehen sind,
wobei das Reinigungselement (33 61) ausgebildet ist, mit dem daran vorgesehenen wenigstens einen Eingriffselement (35) mit einer zu reinigenden Bodenfläche (3) einzugreifen,
wobei sich der Bedienholm (7) entlang einer Längsachse (11) zwischen einem proximalen Ende (13) und einem Bestätigungsende (15) erstreckt und über ein Gelenk (9) derart schwenkbar an der Basis (5) angebracht ist, dass der Bedienholm (7) in beliebige Richtungen gegenüber der Basis (5) verschwenkt werden kann,
wobei das Gelenk (9)
ein erstes Gelenkelement (39), dessen Einhüllende kugelschalenförmig ist, und
ein zweites Gelenkelement (47) aufweist,
wobei das erste Gelenkelement (39) in dem zweiten Gelenkelement (47) aufgenommen und darin derart abgestützt ist,
dass das erste Gelenkelement (39) gegenüber dem zweiten Gelenkelement (47) um einen in Bezug auf das zweite Gelenkelement (47) ortsfesten Schwenkpunkt (51), der mit dem Mittelpunkt der Einhüllenden zusammenfällt, verschwenkbar ist und
dass der Mittelpunkt der Einhüllenden relativ zu dem zweiten Gelenkelement (47) unverlagerbar ist,
**dadurch gekennzeichnet, dass**
an einem aus dem ersten und dem zweiten Gelenkelement (39, 47) wenigstens zwei kreisabschnittsförmig verlaufende Nuten (45) vorgesehen sind, die zu der Einhüllenden hin geöffnet sind und sich entlang der Einhüllenden erstrecken, und an dem anderen aus dem ersten und dem zweiten Gelenkelement (39, 47) wenigstens ein erstes Eingriffsteil (57) und ein zweites Eingriffsteil (57) vorgesehen sind, wobei sich das erste Eingriffsteil (57) in die erste der Nuten (45) erstreckt und sich das zweite Eingriffsteil (57) in die zweite der Nuten (45) erstreckt,
wobei das erste Gelenkelement (39) an dem einen aus der Basis (5) und dem proximalen Ende (13) des Bedienholms (7) angebracht ist und das zweite Gelenkelement (47) an dem anderen aus der Basis (5) und dem proximalen Ende (13) des Bedienholms (7) angebracht ist.

2. Bodenreinigungsmaschine nach Anspruch 1, wobei die Nuten (45) bezüglich des Mittelpunktes der Einhüllenden diametral gegenüberliegend an dem einen aus dem ersten und dem zweiten Gelenkelement (39, 47) angeordnet sind.

3. Bodenreinigungsmaschine nach Anspruch 1 oder 2, wobei das erste und das zweite Eingriffsteil (57) in einer durch den Mittelpunkt der Einhüllenden und senkrecht zu der Längsachse (11) des Bedienholms (7) verlaufenden Mittelebene und einander diametral gegenüberliegend angeordnet sind.

4. Bodenreinigungsmaschine nach einem oder mehreren der Ansprüche 1 bis 3, wobei sich die Nuten (45) über mehr als 150° um die Einhüllende erstrecken.

5. Bodenreinigungsmaschine nach einem oder mehreren der Ansprüche 1 bis 4, wobei das zweite Gelenkelement (47) eine kreisförmige Aufnahmeöffnung (55) mit einem Durchmesser aufweist, der kleiner als der Durchmesser der Einhüllenden ist.

6. Bodenreinigungsmaschine nach einem oder mehreren der Ansprüche 1 bis 5, wobei das erste und/oder das zweite Eingriffsteil als Kugel (57) ausgebildet sind, die ortsfest und drehbar an dem anderen aus dem ersten und dem zweiten Gelenkelement (39, 47) gehaltert sind und in einer der Nuten (45) abrollen können.

7. Bodenreinigungsmaschine nach einem oder mehreren der Ansprüche 1 bis 6, wobei an dem ersten Gelenkelement (39) die zwei kreisabschnittsförmig verlaufenden (45) Nuten (45) vorgesehen sind und an dem zweiten Gelenkelement (47) das erste Eingriffsteil und das zweite Eingriffsteil (57) vorgesehen sind.

8. Bodenreinigungsmaschine nach einem oder mehreren der Ansprüche 1 bis 7, wobei das erste Gelenkelement (39) an der Basis (5) angebracht ist und das zweite Gelenkelement (47) an dem proximalen Ende (13) des Bedienholms (7) angebracht ist.

9. Bodenreinigungsmaschine nach einem oder mehreren der Ansprüche 1 bis 8, wobei das Gelenk (9) eine Verriegelungsanordnung aufweist, die ausgestaltet ist, dass sie in eine Freigabestellung und eine Verriegelungsstellung verbracht werden kann,
wobei in der Freigabestellung eine Schwenkbewegung des zweiten Gelenkelements (47) um das erste Gelenkelement (39) möglich ist und
wobei in der Verriegelungsstellung eine Schwenkbewegung des zweiten Gelenkelements (47) um das erste Gelenkelement (39) unmöglich ist.

10. Bodenreinigungsmaschine nach Anspruch 9, wobei eines aus dem ersten und dem zweiten Gelenkelement (39, 47) eine Aufnahmeaussparung (61) aufweist, deren Öffnung sich hin zu der Einhüllenden erstreckt,
wobei an dem anderen aus dem ersten und dem zweiten Gelenkelement (39, 47) ein Riegelelement (59) vorgesehen ist, dass in einer Richtung, die senkrecht zu der Einhüllenden verläuft, gegenüber dem anderen aus dem ersten und dem zweiten Gelenkelement (39, 47) verschiebbar ist, sodass es sich in der Freigabestellung nicht über die Einhüllende hinaus hin zu dem einen aus dem ersten und dem zweiten Gelenkelement (39, 47) erstreckt und es sich in der Verriegelungsstellung über die Einhüllende hinaus hin zu dem einen aus dem ersten und dem zweiten Gelenkelement (39, 47) in die Aufnahmeaussparung erstreckt.

11. Bodenreinigungsmaschine nach Anspruch 10, wobei die Aufnahmeaussparung (61) an dem ersten Gelenkelement (39) vorgesehen ist und das Riegelelement (59) an dem zweiten Gelenkelement (47) vorgesehen ist.

12. Bodenreinigungsmaschine nach einem oder mehreren der Ansprüche 1 bis 11, wobei das wenigstens eine Eingriffselement (35) ein freies Ende aufweist,
wobei das wenigstens eine freie Ende eine Reinigungsebene definiert, in der das wenigstens eine Eingriffselement (35) mit der Bodenfläche (3) eingreift, und
wobei der Bedienholm (7) relativ zu der Basis (5) in eine Vertikalstellung verschwenkbar ist, in der sich die Längsachse (11) des Bedienholms (7) nach oben weg von, vorzugsweise senkrecht zu, der Reinigungsebene (37) erstreckt.

13. Bodenreinigungsmaschine nach einem oder mehreren der Ansprüche 8 bis 11 und nach Anspruch 12, wobei in der Verriegelungsstellung der Bedienholm (7) in der Vertikalstellung ist.

14. Bodenreinigungsmaschine nach Anspruch 12 oder 13, wobei die Bodenreinigungsmaschine (1) ausgebildet ist, im Reinigungsbetrieb in einer Hauptarbeitsrichtung (63) über die zu reinigende Bodenfläche (3) bewegt zu werden, und
wobei ein Vorspannelement (65, 67) vorgesehen ist, das ausgestaltet ist, den Bedienholm (7) in einer aus der Vertikalstellung entgegen der Hauptarbeitsrichtung (63) verschwenkten Stellung mit einer Kraft hin zu der Vertikalstellung zu beaufschlagen.

15. Bodenreinigungsmaschine nach Anspruch 14, wobei das Vorspannelement als ein mit einem ersten Ende (69) am Bedienholm (7) befestigtes Federelement (71) ausgebildet ist, dessen zweites Ende (73) mit einem Gurtelement (75) verbunden ist,
wobei das Gurtelement (75) an der in die Hauptarbeitsrichtung (63) weisenden Seite des Gelenks (9) von dem Bedienholm (7) zu der Basis (5) geführt und an der Basis (5) befestigt ist.

## Claims

1. A floor cleaning machine (l) having
a base (5) and
an operating bar (7),
wherein the base (5) has a cleaning element arrangement (27) with at least one driven cleaning element (33) on which at least one engagement element (35) is provided,
wherein the cleaning element (33 61) is designed to engage with a floor surface (3) to be cleaned by means of the at least one engagement element (35) provided thereon,
wherein the operating bar (7) extends along a longitudinal axis (11) between a proximal end (13) and a actuation end (15) and is pivotably attached to the base (5) via a joint (9) such that the operating bar (7) is pivotable in any direction relative to the base (5),
wherein the joint (9) has
a first joint element (39) whose envelope is spherical shell-shaped, and
a second joint element (47),
wherein the first joint element (39) is received in the second joint element (47) and supported therein in such a way
that the first joint element (39) is pivotable relative to the second joint element (47) about a pivot point (51) fixed in relation to the second joint element (47) and which coincides with the center of the envelope, and
that the center of the envelope is non-displaceable relative to the second joint element (47),
**characterized in that**
at least two grooves (45) extending in the form of a circular segment are provided on one of the first and second joint elements (39, 47), which are open towards the envelope and extend along the envelope, and at least one first engagement part (57) and one second engagement part (57) are provided on the other of the first and second joint elements (39, 47), wherein the first engagement part (57) extends into the first of the grooves (45) and the second engagement part (57) extends into the second of the grooves (45),
wherein the first joint element (39) is attached to one of the base (5) and the proximal end (13) of the operating bar (7) and the second joint element (47) is attached to the other of the base (5) and the proximal end (13) of the operating bar (7).

2. The floor cleaning machine according to claim 1, wherein the grooves (45) are arranged diametrically opposite one another with respect to the center of the envelope on one of the first and second joint elements (39,47).

3. The floor cleaning machine according to claim 1 or 2, wherein the first and the second engagement part (57) are arranged in a central plane running through the center of the envelope and perpendicular to the longitudinal axis (11) of the operating bar (7) and diametrically opposite one another.

4. The floor cleaning machine according to one or more of claims 1 to 3, wherein the grooves (45) extend over more than 150° around the envelope.

5. The floor cleaning machine according to one or more of claims 1 to 4, wherein the second joint element (47) has a circular receiving opening (55) with a diameter which is smaller than the diameter of the envelope.

6. The floor cleaning machine according to one or more of claims 1 to 5, wherein the first and/or the second engagement part are designed as a ball (57) which is fixedly and rotatably mounted on the other of the first and the second joint element (39, 47) and can roll into one of the grooves (45).

7. The floor cleaning machine according to one or more of claims 1 to 6, wherein the two circular segment-shaped grooves (45) are provided on the first joint element (39) and the first engagement part and the second engagement part (57) are provided on the second joint element (47).

8. The floor cleaning machine according to one or more of claims 1 to 7, wherein the first joint element (39) is attached to the base (5) and the second joint element (47) is attached to the proximal end (13) of the operating bar (7).

9. The floor cleaning machine according to one or more of claims 1 to 8, wherein the joint (9) has a locking arrangement which is designed such that it can be brought into a release position and a locking position,
wherein a pivoting movement of the second joint element (47) about the first joint element (39) is possible in the release position, and
wherein a pivoting movement of the second joint element (47) about the first joint element (39) is impossible in the locking position.

10. The floor cleaning machine according to claim 9, wherein one of the first and second joint elements (39, 47) has a receiving recess (61), the opening of which extends towards the envelope,
wherein a locking element (59) is provided on the other of the first and second joint elements (39, 47), that is displaceable in a direction perpendicular to the envelope end relative to the other of the first and second joint elements (39, 47) so that it does not extend beyond the envelope towards the one of the first and second joint elements (39, 47) in the release position and it extends beyond the envelope towards the one of the first and second joint elements (39, 47) into the receiving recess in the locking position.

11. The floor cleaning machine according to claim 10, wherein the receiving recess (61) is provided on the first joint element (39) and the locking element (59) is provided on the second joint element (47).

12. The floor cleaning machine according to one or more of claims 1 to 11, wherein the at least one engagement element (35) has a free end,
wherein the at least one free end defines a cleaning plane in which the at least one engagement element (35) engages with the floor surface (3), and
wherein the operating bar (7) is pivotable relative to the base (5) into a vertical position, in which the longitudinal axis (11) of the operating bar (7) extends upwards away from, preferably perpendicular to, the cleaning plane (37).

13. The floor cleaning machine according to one or more of claims 8 to 11 and according to claim 12, wherein the operating bar (7) is in the vertical position in the locking position.

14. The floor cleaning machine according to claim 12 or 13, wherein the floor cleaning machine (1) is designed to be moved in a main working direction (63) over the floor surface (3) to be cleaned during cleaning operation, and
wherein a pretensioning element (65, 67) is provided which is designed to apply a force to the operating bar (7) in a position pivoted from the vertical position against the main working direction (63) towards the vertical position.

15. The floor cleaning machine according to claim 14, wherein the pretensioning element is designed as a spring element (71) fastened to the operating bar (7) with a first end (69), the second end (73) of which is connected to a belt element (75),
wherein the belt element (75) is guided from the operating bar (7) to the base (5) on the side of the joint (9) facing in the main working direction (63) and is fastened to the base (5).

## Revendications

1. Machine de nettoyage du sol (l) comportant
une base (5) et
une barre de commande (7),
dans laquelle la base (5) comporte un agencement d'éléments de nettoyage (27) comportant au moins un élément de nettoyage (33) entraîné, sur lequel est fourni au moins un élément de mise en prise (35),
dans laquelle l'élément de nettoyage (33 61) est conçu pour venir en prise, au moyen de l'au moins un élément de mise en prise (35) fourni sur celui-ci, avec une surface de sol (3) à nettoyer,
dans laquelle la barre de commande (7) s'étend le long d'un axe longitudinal (11) entre une extrémité proximale (13) et une extrémité d'actionnement (15) et est montée de manière pivotante sur la base (5) par l'intermédiaire d'une articulation (9) de telle sorte que la barre de commande (7) peut pivoter dans n'importe quelle direction par rapport à la base (5),
dans laquelle l'articulation (9)
comporte un premier élément d'articulation (39) dont l'enveloppe est en forme de cuvette sphérique, et
un second élément d'articulation (47),
dans laquelle le premier élément d'articulation (39) est logé dans le second élément d'articulation (47) et y est supporté de telle sorte
que le premier élément d'articulation (39) peut pivoter par rapport au second élément d'articulation (47) autour d'un point de pivotement (51), lequel est fixe par rapport au second élément d'articulation (47) et lequel coïncide avec le centre de l'enveloppe et
que le centre de l'enveloppe est immobile par rapport au second élément d'articulation (47),
**caractérisée en ce que**
sur le premier ou le second élément d'articulation (39, 47), sont fournies au moins deux rainures (45) s'étendant en forme de section circulaire, lesquelles sont ouvertes vers l'enveloppe et s'étendent le long de l'enveloppe, et, sur l'autre du premier et du second élément d'articulation (39, 47), sont fournies au moins une première partie de mise en prise (57) et une seconde partie de mise en prise (57), dans laquelle la première partie de mise en prise (57) s'étend dans la première des rainures (45) et la seconde partie de mise en prise (57) s'étend dans la seconde des rainures (45),
dans laquelle le premier élément d'articulation (39) est monté sur la base (5) ou l'extrémité proximale (13) de la barre de commande (7) et le second élément d'articulation (47) est appliqué sur l'autre élément parmi la base (5) et l'extrémité proximale (13) de la barre de commande (7).

2. Machine de nettoyage du sol selon la revendication 1, dans laquelle les rainures (45) sont agencées diamétralement opposées au premier ou au second éléments d'articulation (39, 47) par rapport au centre de l'enveloppe.

3. Machine de nettoyage du sol selon la revendication 1 ou 2, dans laquelle les première et seconde parties de mise en prise (57) sont agencées dans un plan central passant par le centre de l'enveloppe et perpendiculaire à l'axe longitudinal (11) de la barre de commande (7) et diamétralement opposés l'une à l'autre.

4. Machine de nettoyage du sol selon l'au moins une des revendications 1 à 3, dans laquelle les rainures (45) s'étendent sur plus de 150 ° autour de l'enveloppe.

5. Machine de nettoyage du sol selon l'au moins une des revendications 1 à 4, dans laquelle le second élément d'articulation (47) comporte une ouverture de réception (55) circulaire dont le diamètre est inférieur au diamètre de l'enveloppe.

6. Machine de nettoyage du sol selon l'au moins une des revendications 1 à 5, dans laquelle la première et/ou la seconde partie de mise en prise sont réalisées sous la forme de billes (57), lesquelles sont maintenues fixes et rotatives sur l'autre du premier et du second élément d'articulation (39, 47) et peuvent rouler dans l'une des rainures (45).

7. Machine de nettoyage du sol selon l'au moins une des revendications 1 à 6, dans laquelle les deux rainures (45) s'étendant en forme de section (45) circulaire sont fournies sur le premier élément d'articulation (39) et la première partie de mise en prise et la seconde partie de mise en prise (57) sont fournies sur le second élément d'articulation (47).

8. Machine de nettoyage du sol selon l'au moins une des revendications 1 à 7, dans laquelle le premier élément d'articulation (39) est monté sur la base (5) et le second élément d'articulation (47) est monté sur l'extrémité proximale (13) de la barre de commande (7).

9. Machine de nettoyage du sol selon l'au moins une des revendications 1 à 8, dans laquelle l'articulation (9) comporte un agencement de verrouillage, lequel est conçu de telle sorte qu'il puisse être amené dans une position de libération et une position de verrouillage,
dans laquelle, dans la position de libération, un mouvement de pivotement du second élément d'articulation (47) autour du premier élément d'articulation (39) est possible et
dans laquelle, dans la position de verrouillage, un mouvement de pivotement du second élément d'articulation (47) autour du premier élément d'articulation (39) est impossible.

10. Machine de nettoyage du sol selon la revendication 9, dans laquelle le premier ou le second élément d'articulation (39, 47) comporte un évidement de réception (61) dont l'ouverture s'étend vers l'enveloppe,
dans laquelle sur l'autre des premier et second éléments d'articulation (39, 47) est fourni un élément de blocage (59), lequel est déplaçable dans une direction, laquelle s'étend perpendiculairement à l'enveloppe, par rapport à l'autre des premier et second éléments d'articulation (39, 47), de telle sorte que dans la position de libération, il ne s'étend pas au-delà de l'enveloppe vers l'un des premier et second éléments d'articulation (39, 47) et dans la position de verrouillage, il s'étend au-delà de l'enveloppe vers le premier ou le second élément d'articulation (39, 47) dans l'évidement de réception.

11. Machine de nettoyage du sol selon la revendication 10, dans laquelle l'évidement de réception (61) est fourni sur le premier élément d'articulation (39) et l'élément de blocage (59) est fourni sur le second élément d'articulation (47).

12. Machine de nettoyage du sol selon l'au moins une des revendications 1 à 11, dans laquelle l'au moins un élément de mise en prise (35) comporte une extrémité libre,
dans laquelle l'au moins une extrémité libre définit un plan de nettoyage dans lequel l'au moins un élément de mise en prise (35) vient en prise avec la surface de sol (3), et
dans laquelle la barre de commande (7) peut pivoter par rapport à la base (5) dans une position verticale dans laquelle l'axe longitudinal (11) de la barre de commande (7) s'étend vers le haut en s'éloignant, de préférence perpendiculairement, du plan de nettoyage (37).

13. Machine de nettoyage du sol selon l'au moins une des revendications 8 à 11 et selon la revendication 12, dans laquelle, dans la position de verrouillage, la barre de commande (7) est en position verticale.

14. Machine de nettoyage du sol selon la revendication 12 ou 13, dans laquelle la machine de nettoyage du sol (1) est conçue pour être déplacée dans une direction de travail principale (63) sur la surface de sol (3) à nettoyer pendant l'opération de nettoyage, et
dans laquelle est fourni un élément de sollicitation (65, 67), lequel est conçu pour exercer une force vers la position verticale sur la barre de commande (7) dans une position pivotée depuis la position verticale contre la direction de travail principale (63).

15. Machine de nettoyage du sol selon la revendication 14, dans laquelle l'élément de sollicitation est conçu sous la forme d'un élément à ressort (71), fixé à la barre de commande (7) au moyen d'une première extrémité (69), dont la seconde extrémité (73) est reliée à un élément de sangle (75),
dans laquelle l'élément de sangle (75) est guidé depuis la barre de commande (7) jusqu'à la base (5) sur le côté de l'articulation (9) orienté dans la direction de travail principale (63) et est fixé à la base (5).
